# EUROPEAN PATENT APPLICATION

(11) **EP 4 722 793 A1**
(43) Date of publication of application: **08.04.2026**
(21) Application number: 24306634.7
(22) Date of filing: 04.10.2024
(51) Int. Cl.: G02C 7/02, G02C 7/10, G02F 1/15, G02F 1/155, B23K 26/00

(54) **METHOD FOR MARKING AN OPTICAL ELEMENT**

(71) Applicant: Essilor International, 94220 Charenton-Le-Pont (FR)
(72) Inventor: LEGUY, Dominique, 21000 DIJON (FR); GIRARD, Stélie, 75014 PARIS (FR)
(74) Representative: Cabinet Novitech

(57) **Abstract**

The invention relates to a method for providing a predefined pattern in an electro-activable optical article, the method comprises:
- providing an electro-activable optical article comprising an electro-activable element, said electro-activable element comprising an electro-activable layer between two electroconductive layers,
- providing a predefined pattern in the electro-activable optical article by marking at least one of the two electroconductive layers using a laser source.

## Description

### FIELD OF THE DISCLOSURE

The invention relates to a method for providing a predefined pattern in an electro-activable optical article and an ophthalmic article comprising an electroactive element, the element having two electroconductive layers separated at least by an electroactive layer, at least one of the electroconductive layers being removed along a pattern.

### BACKGROUND OF THE DISCLOSURE

Electro-activable optical articles, such as electrochromic lenses or augmented reality lenses are patented more and more and are presented as being the future of either the eyeglass model or of the smartphone model.

Such elements are easily marked in their clear state, using the marking methods known to the state of the art, such as branding the substrate, or one of the hard coating or antireflective stack that may be present on the lens. This enable the mark to be visible in the clear state, with the appropriate tools.

However, on the mode in which the electroactive optical article is not clear, it may have a dark color, or even a different varied colors or tints. This is in particular the case for electrochromic lenses. However augmented reality lenses may have a variation of tints, representing different signals that should be visible to the wearer, and those may blur the marking.

Therefore, the markings that are done using the known methods are not visible in the active mode of the electro-activable optical article. In particular, when the active mode corresponds to a dark color, for example black.

Accordingly, there is a need for a method for marking electro-activable optical article in such a way that the marking is visible in one of the dark or activated state.

One object of the disclosure is to provide such method and an electro-activable optical article comprising such a marking.

### SUMMARY OF THE DISCLOSURE

To this end, the disclosure proposes a method for providing a predefined pattern in an electro-activable optical article, the method comprises:
- providing an electro-activable optical article comprising an electro-activable element, said electro-activable element comprising an electro-activable layer between two electroconductive layers,
- providing a predefined pattern in the electro-activable optical article by marking at least one of the two electroconductive layers using a laser source.

Advantageously, marking directly the at least one of the two electroconductive layers removes part of the electroconductive layer and cuts the electrical conductivity of the electroconductive layer. Therefore, when the electro-activable optical article is activated the zone of the predefined pattern stays clear instead of being activated.

Advantageously, using a laser source allows an accurate removal of the at least one of the two electroconductive layers. Therefore, the method of the disclosure may be used to obtain a great variety of predefined patterns such as brand marking or functional marking such as an arrow link to a GPS to help orient the wearer.

According to embodiments, the method according to the disclosure may further comprise one or several of the following features according to any possible combination:
- the electroconductive layers are transparent electroconductive layers; and/or
- providing a predefined pattern in the electro-activable optical article comprises removing at least 90%, for example at least 99% of the electroconductive properties of at least one of the two electroconductive layers over said predefined pattern,
- providing a predefined pattern in the electro-activable optical article comprises removing at least 90%, for example at least 99% of the electroconductive layer of at least one of the two electroconductive layers over said predefined pattern; and/or
- removing at least 90%, for example at least 99% of the electroconductive layer of at least one of the two electroconductive layers over said predefined pattern comprises using laser removing or etches of the electroconductive layer; and/or
- the electro-activable element of the optical article is provided between two transparent outer shells, for example made of mineral material or made of a polymer material and providing the predefined pattern on the two electroconductive layers is done through the transparent outer shells; and/or
- the method further comprising after providing a predefined pattern in the electro-activable optical article:
   ∘ proving two transparent outer shells, for example made of mineral material or made of a polymer material, and
   ∘ encapsulating the electro-activable element of the optical article between the two transparent outer shells; and/or
- the electro-activable element comprises, between the electroconductive layers and the electro-activable layer a further supporting layer; and/or
- the laser is a UV laser, for example a diode pumped solid state laser, configured to etch the electroconductive layers without etching the supporting layer, for example the laser emits in wavelengths greater than or equal to 150 nm and smaller than or equal to 370 nm; and/or
- the laser is a pulsed laser and the hatching or dot of the laser is repeated on the same spot at least 2 times and at most 20 times, for example at most 10 times; and/or
- providing the predefined pattern is done by a tracing of the contour of the pattern onto the electroconductive layers, forming a closed loop or shape; and/or
- laser is a pulsed laser and the dots of the laser being either superimposed for more than 10%, for example more than 20%, for example for more than 50%, preferably for more than 90; and/or or
- laser is a pulsed laser and the dots of the laser being separated by about 1 to 50µm, preferably by about 5 to 10µm; and/or- the laser is a UV pulsed laser with a frequency between 500Hz and 50MHz, with an energy between 1µJ and 20µJ; and/or
- the laser is a 266 nm or 355 nm pulsed laser with a frequency between 10Hz and 30 kHz; and/or
- both electroconductive layers are marked with the predefined pattern; and/or
- the predefined patterns of both electroconductive layers match; and/or
- the predefined pattern is a decorative pattern; and/or
- the electroactive layer comprises an electrochromic element such as an electrochromic compound or electrochromic liquid crystals; and/or
- the electroactive element is mounted into or onto an ophthalmic lens before or after the providing the predefined pattern; and/or
- the electroconductive layer is a transparent conductive oxide, for example ITO (InSnO) or SnO2.

The disclosure also relates to an ophthalmic article comprising an electroactive element, the element having two electroconductive layers separated at least by an electroactive layer, at least one of the electroconductive layers being removed along a pattern.

The pattern may be a closed loop and part of the electroactive layer, within that closed loop is blocked from activating.

The ophthalmic article may be an ophthalmic lens.

### BRIEF DESCRIPTION OF THE DRAWINGS

Other characteristics and advantages of the disclosure will become more apparent from the claims and from the following description of some embodiments given by way of example without limitation with reference to the drawings, in which:
- Figure 1 is a flowchart of the different steps of a method for providing a predefined pattern in an electro-activable optical article according to the disclosure,
- Figure 2 is a perspective view of an ophthalmic article according to an example of the disclosure;
- Figure 3 is a front view of an electro-activable optical article according to the disclosure; and
- Figure 4 is a schematic cross-sectional view in the plane IV-IV of figure 3 of an electro-activable optical article according to the disclosure.

Elements in the figures are illustrated for simplicity and clarity and have not necessarily been drawn to scale. For example, the dimensions of some of the elements in the figure may be exaggerated relative to other elements to help improve the understanding of the embodiments of the present disclosure.

### DETAILED DESCRIPTION OF PREFERRED EMBODIMENTS

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about." Also unless otherwise indicated, the indication of an interval of values « from X to Y » or "between X to Y", according to the present invention, means as including the values of X and Y.

In the reminder of the description, terms like « up », « bottom », « horizontal », « vertical », « above », « below », « front », « rear » or other words indicating relative position may be used. These terms are to be understood in the wearing conditions of the ophthalmic article.

An ophthalmic lens, within the context of the disclosure is an optical element adapted to be worn within spectacles frames or goggles.

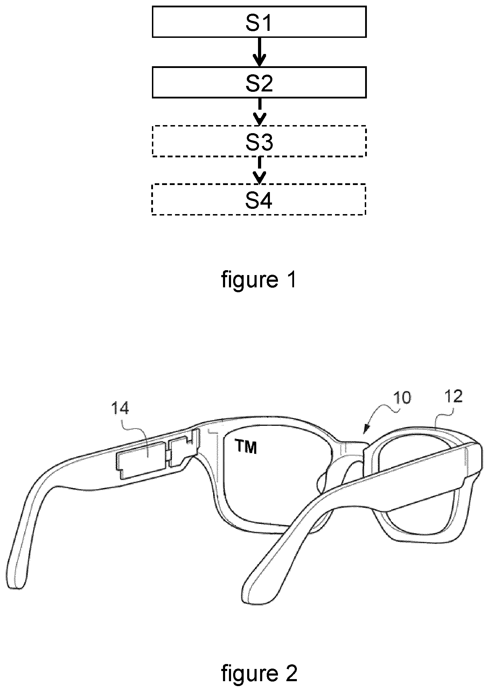

As illustrated on figure 1, the present disclosure relates to a method for providing a predefined pattern in an electro-activable element.

The predefined pattern may be a decorative pattern such as brand logo to help the wearer and people around easily identify the type of electro-activable element a wearer is wearing.

The predefined pattern may also be a functional pattern that may provide functional indication to the user or to the person around the user. For example, the predefined pattern may be an arrow link to the GPS to orientate the user.

As illustrated on figure 1, the method according to the disclosure comprises at least:
- an electro-activable optical article providing step S 1, and
- a predefined pattern providing step S2.

During the electro-activable optical article providing step S 1, an electro-activable optical article comprises an electro-activable element is provided. The electro-activable element comprises an electro-activable layer between two electroconductive layers.

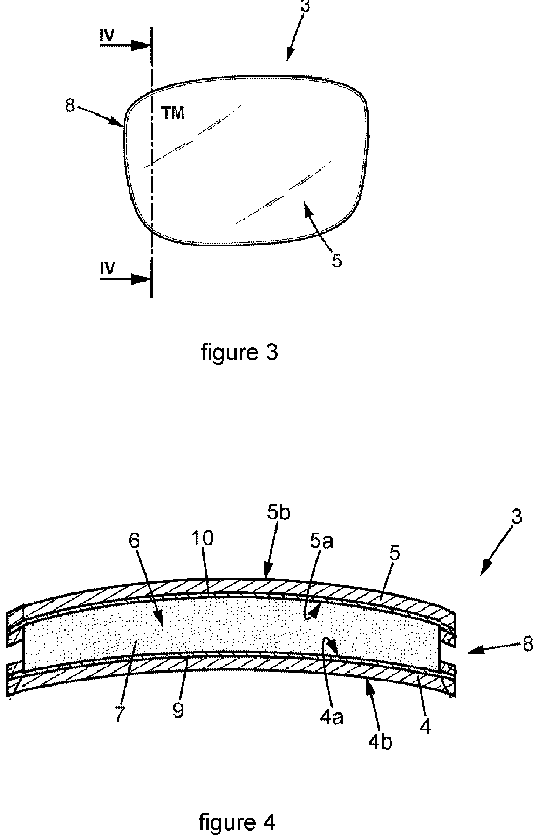

An example of electro-activable optical article is represented on figures 3 and 4.

As represented on figure 4, the electro-activable element 3 may comprises two transparent outer shells 4, 5 forming outer layers that are advantageously not conductive, delimiting between them a cavity 6 intended to receive an electro-activable layer 7.

The electro-activable layer 7 can be activated by applying an electrical tension on two sides of the electro-activable layer. The electrical tension may be applied through use the means of electroconductive layers 9, 10, such as a metallic layer, or more often for optical elements, a metallic oxide layer such as ITO or SnO2 layer.

Further, in view of being integrated in an eyewear, whether into spectacles or on specific smart glasses, the electro-activable optical article may comprise one or more external layers, i.e. outer shells 4, 5, on the electro-activable layer 7. Such external layers may be, without limitation, some of the known added values for ophthalmic lenses such as hard coat or antiscratch layers for protecting the electroactive optical device against scratchs, tinted layers or even polarized layers, mirrors or antireflective optical stacks, and topcoat layers such as anti smudge, antirain or antifog topcoat layers. There can even be different external layers depending on the side of the electro-activable element 3, depending on whether the surface is aimed to be directed toward the eyes of a wearer or toward the outside or even toward a specific electronic screen.

According to an embodiment of the disclosure, the transparent outer shells 4 and 5 are made of mineral material or made of a polymer material.

Thus, each transparent outer shell 4, 5 comprises an inner face 4a, 5a and an outer face 4b, 5b. Thus, the term "inner" more particularly denotes the faces 4a, 5a delimiting the cavity 6 of the electro-activable element 3, and the term "outer" more particularly denotes the faces 4b, 5b outside the cavity 6.

The transparent outer shells 4, 5 may also be chosen to filter the ultraviolet radiation, in particular to absorb wavelengths below 420 nm for example. Generally, the material of the transparent outer shells 4, 5, or the treatment of the inner 4a, 5a and/or outer 4b, 5b faces thereof may enable the transparent outer shells 4, 5 to have advantageous features, such as enabling colored reflections, a mirror effect, protection with respect to blue light or protection with respect to infrared radiation, without this list being limiting. These outer faces 4b, 5b may also be coated with anti-scratch coatings, antireflective (AR) coatings, anti-smudge coatings, antifog coatings, primer coatings, etc. According to one embodiment, the transparent outer shells 4, 5 may be colored, photochromic and/or polarized. According to one embodiment, the front shell 5 may be made of a tempered material, so as to increase the mechanical strength thereof.

For example, each of the transparent outer shells 4, 5 may have a hardcoat, an AR coating, an anti-smudge coating or an antistatic coating on its outer surface 4b, 5b. Some hardcoats or AR coatings may also be used under the electroconductive layers 9, 10 described below. Besides, the rear transparent outer shell 4 and/or the front transparent outer shell 5 may also include a polarizing film, or a photochromic layer, or even a photochromic polarizing layer.

Preferably, the transparent outer shells 4, 5 have a thickness of between 50µm and 2000µm, or even between 300µm and 1000µm. The transparent outer shells 4, 5 may for example be spherical shells, and have in particular a spheroid or ovoid shape delimited by a peripheral edge 8.

According to an embodiment, at least one inner face 4a, 5a, in particular both inner faces 4a, 5a, of the transparent outer shells 4, 5 are curved, i.e. they have a non-zero curvature. For example, the inner faces 4a, 5a of the transparent outer shells 4, 5 may each be concave or convex. Moreover, the outer faces 4b, 5b of the transparent outer shells 4, 5 may also be curved, and in particular be concave or convex.

The inner face 4a, 5a of each of the transparent outer shells 4, 5 is at least partially, and preferably completely, covered by an electro-activable layer 9, 10, i.e. which each for example comprises:
- the electroconductive layer is a transparent conductive oxide, for example ITO (InSnO) or SnO2, or
- a transparent conductive coating of at least one TCO deposited by sputtering (e.g. at least one of ATO, ATZO, AZO, FTO, GZO, ITO, ITZO and IZO), or
- an electrically conductive nanostructure based on a metal (e.g. silver), selected from nanomeshes, nanowires and nanogrids and, when needed, being treated with at least one passivation layer to avoid reaction of the metal with an EC formulation of the EC cell,
- a stack of insulator layer - metal layer - insulator layer, where the metal layer is for example silver, gold of copper, the insulator layer in contact with the electrochromic composition comprising a transparent conductive oxide (TCO), for example indium tin oxide (ITO), and the other insulator layer comprising a transparent conductive oxide (TCO), for example indium tin oxide (ITO), or being a non-conductive layer for example able to increase light transmission through the stack or able to form a barrier layer, and/or
- a polymer conductive coating.

The electro-activable element comprises, between the electroconductive layers and the electro-activable layer a further supporting layer.

According to an embodiment of the disclosure, at least one, for example all, of the electroactive layer comprises an electrochromic element such as an electrochromic compound or electrochromic liquid crystals.

During the predefined pattern providing step S2, a predefined pattern is provided in the electro-activable optical article by marking at least one of the two electroconductive layers 9, 10 using a laser source.

Providing a predefined pattern in the electro-activable optical article may comprise removing at least 90%, for example at least 99%, for example 100%, of the electroconductive properties of at least one of the two electroconductive layers over said predefined pattern.

According to an embodiment, providing a predefined pattern in the electro-activable optical article comprises removing at least 90%, for example at least 99%, for example all of the electroconductive layer of at least one of the two electroconductive layers over said predefined pattern. Typically, the predefined pattern providing step S2 may comprises laser removing or etching of at least one of the two electroconductive layers over said predefined pattern.

By removing part of one of the electroconductive layers, one may display any kind of predetermined pattern such as a logo, a trademark, or a functional marking a that independently of the activation mode of the electro-activable optical article. Indeed, by removing part of the electroconductive layers when the electro-activable optical article is activated the predetermined pattern stays clear instead of being activated.

The use of a laser source, in particular of a DPSS laser UV, allows to remove or engrave the electroconductive layers, for example the ITO layer, without damaging the outer shells on which said electroconductive layers is and so have no visible pattern when the electro-activable optical article in in a clear state.

According to an embodiment of the disclosure, the laser is a UV laser, for example a diode pumped solid state laser, configured to etch at least one of the electroconductive layers without etching the supporting layer, for example the laser emits in wavelengths greater than or equal to 150 nm and smaller than or equal to 370 nm.

The laser used during the predefined pattern providing step S2, may be a pulsed laser and the hatching or dot of the laser is repeated on the same spot at least 2 times and at most 20 times, for example at most 10 times.

When using a pulse laser, the dots of the laser may be either superimposed for more than 10%, for example for more than 20%, for example for more than 50%, preferably for more than 90%.

In some cases, typically when using dots having diameters comprised between 45 µm and 50 µm, the pitch of the pulsed laser can be set to about 30 µm.

Typically, the laser is a UV pulsed laser with a frequency between 500Hz and 50MHz, and with an energy between 1µJ and 20µJ.

To obtain a fast engraving of the predetermined pattern, the laser may be a 266 nm or 355 nm pulsed laser with a frequency between 10 Hz and 30 kHz, for example 20kHz, with an energy between 4 and 6 µJ, for example 5 µJ. The pulses are repeated between 3 and 5 times, for example 4 times with a dot space between 8 and 12 µm for example around 10 µm.

Alternatively, the laser may be a UV laser at 266 nm pulsed laser with a frequency between 500 Hz and 50 MHz, for example 1kHz, with an energy between 4 and 6 µJ, for example 5 µJ. The pulses are repeated between 3 and 5 times, for example 4 times with a dot space between 8 and 12 µm for example around 10 µm. Advantageously, such laser allows a complete removal of the electroconductive layers and obtaining accurate edges.

It is to be noted that some lasers of higher pulse frequency can still be used within the scope of the disclosure.

Providing the predefined pattern is done by a tracing of the contour of the pattern onto the electroconductive layers, forming a closed loop or shape.

According to an embodiment of the disclosure, both electroconductive layers are marked with the predefined pattern.

For example, the predefined pattern of both electroconductive layers match.

For specific predefined pattern with internal shape, like for example internal hole of the letter O, a fine connection between the external zone and the internal zone may remain to allow the electronic activation of this internal zone and its appearance.

As illustrated on figure 1, the method of the disclosure may further comprise after providing a predefined pattern in the electro-activable optical article:
- a transparent outer shell providing step S3, and
- a encapsulating step S4.

During the transparent outer shell providing step S3, at least two transparent outer shells, for example made of mineral material or made of a polymer material are provided.

During the encapsulating step S4, the electro-activable element of the optical article are encapsulating between the two transparent outer shells.

The method of the disclosure may further comprise mounting the electroactive element into or onto an ophthalmic lens before or after the providing the predefined pattern.

As illustrated on figure 2, the disclosure also relates to an ophthalmic article 10 comprising an electroactive element, the element having two electroconductive layers separated at least by an electroactive layer, at least one of the electroconductive layers being removed along a pattern. The ophthalmic article may comprise a spectacle frame 12 on which two electroactive elements are mounted. The ophthalmic article may comprise a battery 14 that provides power for controlling the electroactive elements.

The pattern may a closed loop and part of the electroactive layer, within that closed loop is blocked from activating.

The disclosure has been described above with the aid of embodiments without limitation of the general inventive concept. Moreover, the embodiments of the disclosure may be combined without any restriction.

Many further modifications and variations will suggest themselves to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. Method for providing a predefined pattern in an electro-activable optical article, the method comprises:
- providing an electro-activable optical article comprising an electro-activable element, said electro-activable element comprising an electro-activable layer between two electroconductive layers,
- providing a predefined pattern in the electro-activable optical article by marking at least one of the two electroconductive layers using a laser source.

2. Method according to claim 1, wherein the electroconductive layers are transparent electroconductive layers.

3. Method according to claim 1 or 2, wherein providing a predefined pattern in the electro-activable optical article comprises removing at least 90%, for example at least 99% of the electroconductive properties of at least one of the two electroconductive layers over said predefined pattern, for example comprises removing at least 90%, for example at least 99% of the electroconductive layer of at least one of the two electroconductive layers over said predefined pattern.

4. Method according to any of the preceding claims, wherein the electro-activable element of the optical article is provided between two transparent outer shells, for example made of mineral material or made of a polymer material and providing the predefined pattern on the two electroconductive layers is done through the transparent outer shells.

5. Method according to any of the preceding claims, wherein the electro-activable element comprises, between the electroconductive layers and the electro-activable layer a further supporting layer.

6. Method according to the preceding claim, wherein the laser is a UV laser, for example a diode pumped solid state laser, configured to etch the electroconductive layers without etching the supporting layer, for example the laser emits in wavelengths greater than or equal to 150 nm and smaller than or equal to 370 nm.

7. Method according to any of the two preceding claims, wherein providing the predefined pattern is done by a tracing of the contour of the pattern onto the electroconductive layers, forming a closed loop or shape.

8. Method according to any of the preceding claims, wherein the laser is a UV pulsed laser with a frequency between 500Hz and 50MHz, with an energy between 1µJ and 20µJ.

9. Method according to any of the preceding claims, wherein both electroconductive layers are marked with the predefined pattern.

10. Method according to the preceding claim, wherein the predefined pattern of both electroconductive layers match.

11. Method according to any of the preceding claims, wherein the electroactive layer comprises an electrochromic element such as an electrochromic compound or electrochromic liquid crystals.

12. Method according to any of the preceding claims, wherein the electroactive element is mounted into or onto an ophthalmic lens before or after the providing the predefined pattern.

13. Method according to any of the preceding claims, wherein the electroconductive layer is a transparent conductive oxide, for example ITO (InSnO) or SnO₂.

14. Ophthalmic article comprising an electroactive element, the element having two electroconductive layers separated at least by an electroactive layer, at least one of the electroconductive layers being removed along a pattern.

15. Article according to the preceding claim, wherein the pattern is a closed loop and part of the electroactive layer, within that closed loop is blocked from activating.
